# EUROPEAN PATENT APPLICATION

(11) **EP 1 755 287 A1**
(43) Date of publication of application: **21.02.2007**
(21) Application number: 05730399.2
(22) Date of filing: 24.03.2005
(51) Int. Cl.: H04L 12/56, H04L 29/06

(54) **A METHOD FOR CONTROLLING THE SEPARATED FLOW OF SIGNALING AND MEDIA IN IP TELEPHONE NETWORK**

(30) Priority: 21.04.2004 CN 200410009033
(71) Applicant: ZTE Corporation, Shenzhen, Guangdong 518057 (CN)
(72) Inventor: PAN, Y, ZTE Plaza, 518057 Shenzhen, Guangdong (CN); ZHOU, A., ZTE Plaza, 518057 Shenzhen, Guangdong (CN); RUAN,Tao, ZTE Plaza, 518057 Shenzhen, Guangdong (CN); CHAI, W., ZTE Plaza, 518057 Shenzhen, Guangdong (CN); CHEN, S., ZTE Plaza, 518057 Shenzhen, Guangdong (CN)
(74) Representative: Leszczynski, André
(86) International application number: PCT/CN2005/000373
(87) International publication number: WO 2005/104450

(57) **Abstract**

The present invention relates to a method for controlling the flow separation of signaling and media in IP telephony network, applied to the IP telephony network based on the H.323 protocol, **characterized in that** the method comprises the steps of: identifying the data packets of the signaling information and media information, labeling the data packets of signaling information and media information transmitted between the internal and external of the metropolitan area network in the IP telephony network with different TOS values according to the calling procedure rules of the H.323 protocol, and policy routing the data packets signaling information and media information in the internal and external of the metropolitan area network strategically according to the different TOS values upon the cooperation of the gatekeeper and router in the IP telephony network to achieve the flow separation of the signaling information and media information. The flow separation of the signaling and media based on the H.323 standard in the IP telephony network is achieved in the present invention, which enhances the security and maintenance of the IP telephony network greatly, improves the network executing efficiency. Also, basis and controlling means for clients are provided to optimize the configuration of the network resources by dealing with the signaling packets and media packets, audio packets and video packets in a flow separation manner.

## Description

### TECHNICAL FIELD

The present invention relates to a method for transporting the signal and media in a manner of flow separating in the field of data communication, and more particularly to a method for transporting the signaling and media in IP telephony network in services based on H.323 standard, which includes services of IP telephony, fax, video and so on, in a manner of flow separating.

### BACKGROUND OF THE INVENTION

Recently, with the Internet services being highly developed by big operators, the construction of the network of IP telephony, fax and video based on H.323 standard has also got a heat development. However, problems created due to the open character of the Internet, for example, lacking security, being impossible to guarantee the QOS of signaling packets and media packets and so on, are still tough for researchers in the field.

The flow separation control on all H.323 signaling packets and media packets can be achieved in the current network by first labeling the IP headers of all H.323 signaling packets and media packets transmitted in the IP network with different TOS values and then using the TOS-based policy routing function on the border routers.

However, difficulties still exist if it's needed to label the IP headers of all the H.323 signaling packets and media packets with different TOS values, wherein the difficulties are shown as below:

firstly, a set of rules in conformity with H.323 call procedure needs to be constituted so that devices on the network may know when it's the timing to label the TOS values, into which IP packets will it label the TOS values and what kind of TOS tag will be labeled;

secondly, for H.323 protocol stacks alteration of the TOS tag is achieved by utilizing the called functions provided by an operating system, and the source codes of the bottom called functions of most current mainstream operating systems are not open, i.e. the operation of labeling the IP packets with a specified TOS tag must be in conformity with the rules used by the operating system to deal with the TCP/IP protocol packets, therefore, the timing to label with the TOS value is confined;

thirdly, a set of rules in conformity with the H.323 call procedure needs to be constituted so as to enable the TOS label information to be exchanged conveniently between H.323 devices running in the network;

fourthly, the rule solution worked out should be one that can be adjusted flexibly and conveniently so as to meet all kinds of actual needs required by different clients.

### SUMMARY OF THE INVENTION

The problem to be solved in the present invention is to provide a method for controlling the flow separation of signaling and media in IP telephony network based on H.323 standard. By using the method, it's easy for the users to make strategies to label the data packets of signaling and media in conformity with H.323 standard with TOS values so that the policy routing based on the TOS value can be achieved by the users to route the H.323 standard signaling and media packets within the metropolitan area network through the routers. The data packets of signaling and media include packets transmitted between gatekeepers, between border gateways and between gatekeeper and border gateway within the metropolitan area network, and also include packets transmitted between gatekeepers and border gateways within the metropolitan area network and those outside the metropolitan area network;

Another object of the present invention is to provide a method for controlling the flow separation of signaling and media in IP telephony network based on H.323 standard, which provides a specific realization means that can be used to label the data packets of signaling and media in different calling modes and at different stages in conformity with the H.323 standard with TOS values while the situation of bottom called in the existing operation systems remains the status quo.

To achieve the objects mentioned above, the present invention provides a method for controlling the flow separation of signaling and media in IP telephony network. The method is applied to the IP telephony network based on H.323 protocol. The method comprises the following steps of: identifying the data packets of the signaling information and media information; labeling the data packets of the signaling information and media information transmitted between the internal and external of the metropolitan area network in the IP telephony network with different TOS values according to the calling procedure rules of the H.323 protocol; and policy routing the data packets of the signaling information and media information in the internal and external of the metropolitan area network based on said different TOS values upon the cooperation of the gatekeepers and routers configured in the IP telephony network to achieve the flow separation of signaling information and media information.

Said method for controlling the flow separation of signaling and media in IP telephony network, characterized in that the method comprises the following steps:

a) negotiating the TOS values used for data packets transported within the local zone and data packets outgoing zone between the border gateway and gatekeeper within the metropolitan area network and configuring a TOS-based policy routing on the router;

b) establishing mapping tables based on TOS values on the gatekeeper, wherein said mapping tables include a mapping table A that maps the TOS value to the analysis field of the calling party number and the called party number of the call, a mapping table B that maps the TOS value to the IP address of the neighbor gatekeeper outside the metropolitan area network, and a mapping table C that maps the TOS value to the ports detected by the TCP link proxy procedure;

c)starting multiple TCP proxy procedures according to the mapping relationship shown in the mapping table C, detecting TCP link request from the external at the multiple ports and binding and assigning the corresponding TOS value in the mapping table C to said port in the phase when each TCP proxy procedure initializes the said port detected ;

d) achieving the flow separation of the signaling and media by identifying the data packets of the signaling messages and packet messages, labeling the data packets of the signaling information and media information in different call modes and at different stages transmitted between the internal and external of the metropolitan area network in the IP telephony network with corresponding TOS values according to the call procedure rules of H.323 protocol and by querying the corresponding mapping tables A, B, or C, and performing policy routing based on the TOS value upon the cooperation of the gatekeeper and router.

Said method for controlling the flow separation of the signaling and media in IP telephony network, characterized in that the step of configuring a TOS-based policy routing on routers in step a) further comprises the step of configuring a TOS-based policy routing on the border routers in the metropolitan area network in the IP telephony network and configuring a TOS-first based policy routing on the routers in backbone network.

Said method for controlling the flow separation of the signaling and media in IP telephony network, characterized in that said step of configuring TOS-first based policy routing on routers in the backbone network further comprises the step of applying a strategy of first analyzing the calling party number, wherein said strategy includes: performing query according to the calling party number first in order to obtain and set the corresponding TOS value for routing; and performing query according to the called party number then if no mapping result can be found by said query according to the calling party number.

Said method for controlling the flow separation of the signaling and media in IP telephony network, characterized in that said step d) further comprises: obtaining the corresponding TOS values according to the calling party number and the called party number contained in the LRQ message that is transmitted from the gatekeeper to the neighbor gatekeeper outside the metropolitan area network according to the mapping relationship shown in the mapping table A, and setting said corresponding TOS value into the IP header of said LRQ message.

Said method for controlling the flow separation of the signaling and media in IP telephony network, characterized in that said step d) further comprises: obtaining the corresponding TOS value according to the IP address of the neighbor gatekeeper within the backbone network in said IP telephony network contained in the LRQ message that is received by the gatekeeper from the neighbor gatekeeper outside the metropolitan area network according to the mapping relationship shown in the mapping table B, and labeling the IP header of the LCF or LRJ message responded with said corresponding TOS value.

Said method for controlling the flow separation of the signaling and media in IP telephony network, characterized in that the method further comprises the following steps if the message responded is an LCF message: querying the mapping table C to obtain the ports detected by the corresponding TCP link proxy procedure according to said corresponding TOS value labeled; filling said ports into said LCF message; returning said LCF message to the remote terminal gatekeeper in said IP telephony network to dictate that the following setup messages of the remote terminal must be forwarded to said ports detected by the corresponding TCP link proxy procedure.

Said method for controlling the flow separation of the signaling and media in IP telephony network, characterized in that said step d) further comprises: obtaining the corresponding TOS value according to the called party number contained in the first setup message of the Q.931 message that is sent from the gatekeeper to the external of said metropolitan area network according to the mapping relationship shown in the mapping table A, and setting said corresponding TOS values into the IP headers of all the following Q.931 messages.

Said method for controlling the flow separation of the signaling and media in IP telephony network, characterized in that said step d) further comprises the step of evaluating the TOS value included in the nonstandard field of the ACF messages returned to the border gateway from the gatekeeper, wherein said TOS value included in the nonstandard field of the ACF messages are evaluated according to the following rules:

setting the TOS value included in the nonstandard field of the ACF message as the defaulted value if it's a call within the metropolitan area network;

determining the TOS value included in the nonstandard field of the ACF messages by querying the mapping table A according to the called party number in the calling party ARQ message if it's a call going out of the metropolitan area network;

determining the TOS value included in the nonstandard field of the ACF messages by querying the mapping table A according to the called party number in the called party ARQ message in defaulted case if it's a call coming into the metropolitan area network; wherein before said query, it's allowed to analyze the calling party number in the ARQ message first, which comprises the step of determining the TOS values corresponding to the calling party number by querying the mapping table A and checking the priority sign corresponding to said TOS value, wherein if said TOS value is set with a top priority then it will be first filled into the nonstandard field of the ACF messages.

Said method for controlling the flow separation of signaling and media in IP telephony network, characterized in that said step d) further comprises: said border gateway obtaining the TOS value from the nonstandard field in the received ACF messages returned by the gatekeeper after the border gateway sending the calling party ARQ message to the gatekeeper to request address resolution; said border gateway saving said TOS value obtained; and said border gateway checking whether or not the call signaling address contained in the ACF message is the IP address of the home gatekeeper; if yes, the call is indicated to be a route call, then the defaulted TOS value will be set into the IP header of all the following Q.931 messages; otherwise, the call is indicated to be a direct call, then the returned TOS value in the nonstandard field in said ACF message will be set into the IP header of all the following Q.931 messages.

Said method for controlling the flow separation of signaling and media in IP telephony network, characterized in that said step d) further comprises: said border gateway obtaining the TOS value from the nonstandard field in ACF messages returned by the gatekeeper after the border gateway sending the calling party or the called party ARQ message to the gatekeeper to request address resolution; said border gateway saving said TOS value obtained; said border gateway setting said saved TOS value into the IP headers of all the H.245 messages if H.245 messages need to be exchanged with a remote terminal in the call and said H.245 messages are not passed through the router of gatekeeper ; said border gateway setting the defaulted TOS value into the IP headers of all the H.245 messages forwarded to the upper-level gatekeeper if H.245 messages need to be exchanged with a remote terminal in the call and said H.245 messages need to be passed through the router of the gatekeeper; and said gatekeeper receiving said H.245 messages transmitted from the border gateway, retrieving the saved TOS values of the corresponding call, setting the corresponding TOS value into the IP headers of all the H.245 messages, and forwarding said H.245 messages to the remote terminal.

Said method for controlling the flow separation of signaling and media in IP telephony network, characterized in that for calls between the first metropolitan area network and the second metropolitan area network which are connected and communicated through the backbone network, said step of policy routing the data packets based on the TOS values comprises:

the border gateway of said second metropolitan area network sending an ARQ message to its home gatekeeper to request admission authentication and address resolution, wherein a zone defaulted value is set in the IP header of said ARQ message;

the gatekeeper of said second metropolitan area network receiving said ARQ message, identifying whether the call is an intra-zone call or an inter-zone call by analyzing the called party address, and obtaining the corresponding TOS value by querying the mapping table A according to the called party number; wherein, if the call is an intra-zone call and has passed the admission authentication, then said gatekeeper returns an ACF message to the border gateway of said second metropolitan network, if the call is an inter-zone call, then said gatekeeper forwards an LRQ message to the gatekeeper of said first metropolitan network corresponding to the called party number;

the gatekeeper of said second metropolitan network sending an LRQ message to the gatekeeper of said first metropolitan network to request address translation, obtaining the corresponding TOS value according to the calling party number and the called party number contained in the message based on the relationship shown in the mapping table A, setting the corresponding TOS value into the IP header of said LRQ message, and forwarding said LRQ message to the router of the backbone network corresponding to the corresponding TOS value by using the TOS based policy routing, wherein said LRQ message is then further transmitted to the gatekeeper of said first metropolitan area network;

the gatekeeper of said first metropolitan network receiving the LRQ message, obtaining the corresponding TOS value by querying the mapping table B according to the source IP field in said LRQ message, and setting the corresponding TOS value into the IP header of the LCF or LRJ message responded; furthermore, if the message responded is an LCF message, the mapping table C also needs to be queried so as to find the ports detected by the corresponding TCP link proxy procedure according to the corresponding TOS value, and said ports are then filled into the LCF message and returned to the gatekeeper of said second metropolitan area network to dictate the second metropolitan network that the following setup messages thereof must be forwarded to the ports detected by the corresponding TCP link proxy procedure;

the gatekeeper of said second metropolitan network forwarding an ACF message to the border gateway of said second metropolitan area network after it receives said LCF message, wherein the TOS value in the IP header of said ACF message is the zone defaulted value and the TOS value in the nonstandard field is determined according to said rules;

the border gateway of said second metropolitan network obtaining the TOS value from the nonstandard field of the returned ACF message, saving said TOS value obtained, and checking whether or not the call signaling address included in the ACF message is the IP address of the home gatekeeper; if yes, the call is indicated to be a route call, then the defaulted TOS values will be set into the IP headers of all the following Q.931 messages; otherwise, the call is indicated to be a direct call, then the TOS values in the nonstandard field returned through the ACF messages will be set into the IP headers of all the following Q.931 messages; wherein, if H.245 messages need to be exchanged with said first metropolitan network in the call, then the border gateway of said second metropolitan network will set said saved TOS value into the IP headers of all the following H.245 messages; if the H.245 messages are exchanged with said first metropolitan network in the call by adopting the mode of gatekeeper route , then the border gateway of said second metropolitan network will set the defaulted TOS value into the IP headers of all the following H.245 messages, wherein the upper-level gatekeeper of said border gateway retrieving the saved TOS values of the corresponding call, setting the corresponding TOS values into IP headers of all H.245 messages before forwarding said H.245 messages and then forwarding the H.245 messages to the remote terminal;

the border gateway of said second metropolitan area network sending an setup message to the call signaling address included in the ACF message to start the call.

The advantage of the present invention is described as below.

The present invention introduces a set of rules for the H.323 gatekeeper and border gateway, labels the H.323 signaling packets and media packets with different TOS values by identifying data of the calling party IP address, the calling party number, the called party number etc. in the call signaling message, cooperates with routers in IP telephony network, and policy routes the signaling packets and media packets based on H.323 standard in the internal and external of the metropolitan network according to the different TOS values. Thereby the present method achieves the flow separation of the signaling and media based on the H.323 standard in the IP telephony network, enhances the security and maintenance of the IP telephony network greatly, improves the network executing efficiency. Also, it provides a basis and a controlling means for clients to optimize the configuration of the network resources by dealing with the signaling packets and media packets, audio packets and video packets in a flow separation manner.

### BRIEF DESCRIPTION OF THE DRAWINGS

Fig.1 is a diagram illustrating the network architecture according to an embodiment of the present invention;

Fig. 2 is a flow chart illustrating the method of the present invention.

### DESCRIPTION OF PREFERRED EMBODIMENTS

Detailed description of the present invention will be given hereinafter with reference to the accompanying drawings and preferred embodiments.

The present invention is applied to an IP telephony network system based on H.323 standard. The H.323 protocol describes the system definition and general controlling procedure for realizing multimedia communications over packet network. A set of protocols including call controlling protocol, media controlling protocol and audio and video encoding protocol etc. are needed to support the H.323 protocol. The set of protocols together with the H.323 protocol form the technical standard of H.323 system.

In IP telephony system of H.323, the ITU-T G series protocols are used to perform audio encoding, in which G.711 is a necessarily used encoding manner and other encoding manners like G.732.1, G.729A etc. are commonly used encoding manners. H.260 series protocols such as H.261, H.263 etc. are used to perform video encoding. The encoded information of audio and video is encapsulated into the RTP and transmitted through UDP. T.120 protocol is used for data communication. The data is transmitted through reliable TCP.

H.225.0 and H.245 are two core protocols of the H.323 system. H.225.0 is mainly used for call control and H.245 is used for controlling the setup, maintenance and release of the multimedia channel. H.225.0 is one of the core protocols of the H.323 system, which comprises the following three parts: call control, RAS and how to encapsulate the audio and video signal by utilizing RTP. The call control signal of H.225.0 originates from Q.931, which functions to establish call connection between endpoints of H.323 (including terminals and gateways) and comprises the procedure of call establishment and release; RAS is the protocol between endpoints and gatekeeper, which mainly performs managing functions of registration, location and call admission etc.. RAS mainly comprises the following protocol procedures.

Gatekeeper discovery: used for the endpoint to automatically search its home gatekeeper. The messages used in Gatekeeper discovery process include Gatekeeper Request (GRQ) message, Gatekeeper Reject (GRJ) message and Gatekeeper Confirm (GCF) message. The endpoint sends a GRQ message by utilizing the manner of multicasting address in order to find its home gatekeeper. The available home gatekeeper responds with a GCF message. After receiving the GCF message, the endpoint selects its gatekeeper, obtains and records the RAS address of the selected gatekeeper so that the address can be used by the following RAS message.

Endpoint Registration: used for the endpoint to register/un-register its own information, which includes its alias address (E.164 address or H.323 identifier) and its call signaling transport layer address, to/from the home gatekeeper. An endpoint can't initiate and receive calls until it registers with a gatekeeper first. The registration indicates that the endpoint has joined into certain management zone. Messages for registration include Registration Request (RRQ) message, Registration Confirm (RCF) message and Registration Reject (RRQ) message. Messages for unregistration include Unregistration Request (URQ) message, Unregistration Confirm (UCF) and Unregistration Reject (URJ) message. The endpoint sends a RRQ message to register with the found home gatekeeper and the gatekeeper responds with a RCF message to the endpoint if the registration is successful. The endpoint sends an URQ message to unregistration with its home gatekeeper and the gatekeeper responds with an UCF message if the unregistration is successful.

Call Admission: for the gatekeeper to control the call admission of the endpoint, which includes subscriber admission authentication and address resolution. The messages used in the Call Admission procedure include Admission Request (ARQ) message, Admission Confirm (ACF) message and Admission Reject (ARJ) message. When the endpoint initiates a call, it sends an ARQ message to its home gatekeeper. The AQR message includes authentication information, destination addresses and the required bandwidth etc..The gatekeeper authenticates the subscribers and resolves the destination addresses. If the gatekeeper agrees to start the call, it will return an ACF message to the endpoint. The allowed allocated bandwidth, and the call signaling transport layer address of the called party obtained after translation or the call signaling transport layer address of the gatekeeper (the specific address contained is decided by the route mode used, i.e. direct route mode or gatekeeper route select mode) are contained in the ACF message. The call signaling transport layer address is used by the H.225.0 call control protocol to initiate a call. When the endpoint receives the admission request, it also needs to send an ARQ message to the gatekeeper for authentication. The gatekeeper returns an ACF message to the endpoint if it agrees the endpoint to accept the call. Then, the endpoint could proceed to deal with the admission procedure.

Location Function: used for requesting the gatekeeper to provide address translation function. The messages used in the Location Function process include Location Request (LRQ) message, Location Confirm (LCF) message and Location Reject (LRJ) message. If an endpoint or a gatekeeper knows the alias address of a certain endpoint and needs to know the call signaling transport layer address of the certain endpoint, it could send an LRQ message to the corresponding gatekeeper. The LRQ message could be sent by the manner of unicast or multicast. If the gatekeeper of the destination endpoint receives the LRQ message, it will return the call signaling transport layer address of the endpoint or that of the gatekeeper to the requesting side by using an LCF message. Whether to return the call signaling transport layer address of the endpoint or that of the gatekeeper is decided by which mode is used by the call signaling , the direct route mode or the gatekeeper select route mode.

Call Disengage: used for the endpoint or gatekeeper to cut off the current call. The messages used in the Call Disengage process include Disengage Request (DRQ) message, Disengage Confirm (DCF) message and Disengage Reject (DRJ) message.

Bandwidth Management: used for the endpoint or the gatekeeper to change the bandwidth determined at the stage of call admission during the call midway. The messages used in the process include Bandwidth Request (BRQ) message, Bandwidth Confirm (BCF) message and Bandwidth Reject (BRJ) message.

State Function: used for the gatekeeper to inquire the endpoint for state information of the calls or that of the endpoint. The endpoint could also be set to report its state information to the gatekeeper periodically. The messages used in the process include Info Request (IRQ) message, Info Request Response (IRR) message, Info Request Ack (IACK) message and Info Request Nak (INAK) message.

Resource Function: used for the gateway to report to the gatekeeper the present available resource, which includes information of the available capacitance, supporting protocol and data rate etc.. The messages used in the process include Resource Available Indication (RAI) message and Resource Available Confirm (RAC) message.

In H.323 system, a call could include many kinds of media messages (audio, video and etc.) at the same time, and each kind of the media messages is transmitted in one logical channel. When initiating a call, the call relationship between the calling party and the called party is firstly established by using the H.225.0 call control protocol and simultaneously H.245 control channel is set up. Then, different media channels (i.e. logical channel) are also established by using H.245 control channel according to the features of the call, which enables multimedia messages to be transmitted over different media channels.

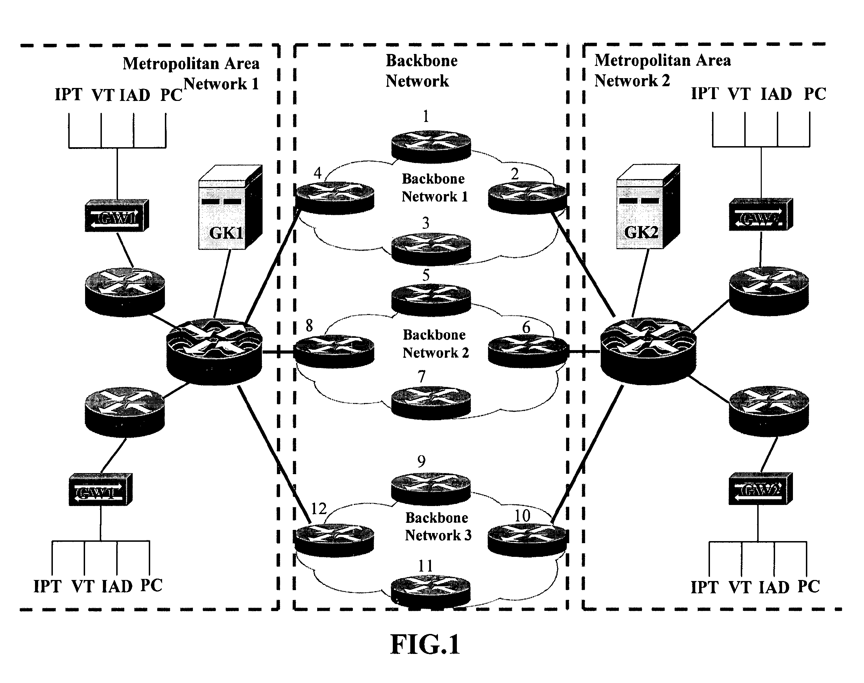

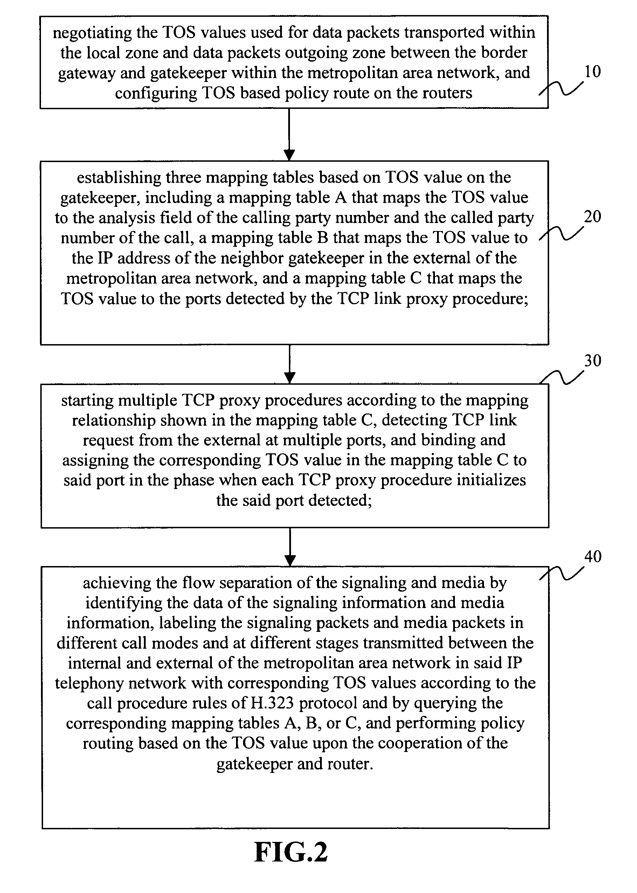

The application of the present invention will be described in detail hereinafter by combining the diagram of the network architecture shown in Fig.1 and referring to the flow chart of the method in Fig.2.

As shown in fig.2, the method includes the following steps:

Step 10, negotiating the TOS values used for data packets transported within the local zone and data packets outgoing zone of the metropolitan area network between the border gateway and gatekeeper within the metropolitan area network. For example, negotiating a as the defaulted TOS value of the H.323 signaling packets and media packets that are transported within the metropolitan area network between the border gateway and gatekeeper in the internal of metropolitan area network, and configuring TOS based policy route on the border router of the metropolitan area network and on the router of the backbone network, wherein the TOS based policy route includes: forbidding the H.323 signaling packets and media packets labeled with TOS value a to be forwarded to the external of the metropolitan area network, and only allowing the H.323 signaling packets and media packets labeled with TOS values b, c, or d, etc. to be forwarded to the corresponding router of the backbone network outside the metropolitan area network. The router in the backbone network routes by using a routing policy in which data packets are first routed according to the TOS, and it directly finds the address of next hop according to the TOS value.

Step 20, establishing three mapping tables based on TOS values on the gatekeeper, which include: a mapping table A that maps the TOS value to the analysis field of the calling party number and the called party number of the call; a mapping table B that maps the TOS value to the IP address of a neighbor gatekeeper outside the metropolitan area network; and a mapping table C that maps the TOS value to the ports detected by the TCP link proxy procedure.

Step 30, starting multiple TCP proxy procedures according to the mapping relationship shown in the mapping table C, detecting TCP link requests coming from the external at multiple ports, binding and assigning the corresponding TOS value in the mapping table C to the port in the phase when each TCP proxy procedure initializes the port detected. These TCP proxy procedures are responsible for forwarding external TCP packets to the call signaling ports that are practically used in local machine and transmitting the TCP packets returned by the local computer to the external remote terminal. Therefore, IP headers of the response TCP messages responded to the TCP link request from different remote terminals can be labeled with corresponding TOS values.

Step 40, achieving the flow separation of signaling and media by identifying the data packets of the signaling information and media information, labeling the data packets of the signaling information and media information in different call modes and at different stages that are transmitted between the internal and external of the metropolitan area network in the IP telephony network with corresponding TOS values according to the calling procedure rules of H.323 protocol and by querying the corresponding mapping tables A, B, or C, and performing a TOS value based policy routing with the cooperation of the gatekeeper and router.

Step 40 mainly comprises the following processes:

(1) The border gateway of the second metropolitan network sends an ARQ message to its home gatekeeper to request admission authentication and address resolution, in which a zone defaulted value is set in the IP header of the ARQ message.

(2) The gatekeeper of the second metropolitan network receives the ARQ message, judges whether the call is an intra-zone call or an inter-zone call by analyzing the called party address, and obtains the corresponding TOS value by querying the mapping table A according to the called party number. Moreover, if the call is an intra-zone call and passes the admission authentication, then an ACF message is returned to the border gateway of said second metropolitan network. Otherwise, if the call is an inter-zone call, then an LRQ message is returned to the gatekeeper of the first metropolitan network corresponding to the called party address.

(3) The gatekeeper of the second metropolitan area network sends an LRQ message to the gatekeeper of said first metropolitan network to request address translation, it obtains the corresponding TOS value according to the calling party number and the called party number in the message based on the mapping relationship shown in the mapping table A, sets corresponding TOS value into the IP header of the LRQ message and forwards said LRQ message to the router of the backbone network corresponding to the corresponding TOS value by using the TOS based policy routing, and said LRQ message is then further forwarded to the gatekeeper of said first metropolitan area network.

(4) The gatekeeper of the first metropolitan network receives the LRQ message, obtains the corresponding TOS value by querying the mapping table B according to the source IP field in the LRQ message, and sets corresponding TOS value into the IP header of the LCF or LRJ message responded; moreover, if the message responded is an LCF message, the mapping table C also needs to be queried so as to find the ports detected by the corresponding TCP link proxy procedure according to the corresponding TOS value. The ports found are then filled into the LCF message and returned to the gatekeeper of the second metropolitan area network, which dictates the second metropolitan area network that the following setup messages thereof must be forwarded to the ports detected by the corresponding TCP link proxy procedure.

(5) The gatekeeper of the second metropolitan area network receives the LCF message and then sends an ACF message to the border gateway of the second metropolitan network, wherein the zone defaulted TOS value is set in the IP header of the ACF message and the TOS value determined according to the above-mentioned rules is set in the non-standard field.

(6) The border gateway of the second metropolitan network obtains the TOS value from the non-standard field of the returned ACF message and saves the TOS value obtained, then checks whether or not the call signaling address included in the ACF message is the IP address of the home gatekeeper; if yes, then the call is indicated to be a route call and the defaulted TOS values will be set into the IP headers of all the following Q.931 messages; otherwise, if the call signaling address included in the ACF message is not the IP address of the home gatekeeper, then the call is indicated to be a direct call and the TOS values in the nonstandard field returned by the ACF message will be into the IP header of all the following Q.931 messages. And if H.245 messages need to be exchanged with said first metropolitan area network in the call, said border gateway of said second metropolitan area network will set said saved TOS value into the IP header of all the following H.245 messages; if H.245 messages are exchanged with said first metropolitan network in said call by using the mode of gatekeeper route, then said gateway of said second metropolitan network will set the defaulted TOS value into set the corresponding TOS value for the IP header of all the following H.245 messages. The upper-level gatekeeper of the border gateway retrieves the saved TOS value of the corresponding call before forwarding the H.245 messages and then sets the corresponding TOS values into the IP headers of all H.245 messages and forwards the H.245 messages to the remote terminal.

(7) The border gateway of the second metropolitan area network sends an setup message to the call signaling address contained in the ACF message to start the call.

The TOS based route in the three backbone networks and two metropolitan networks shown in Fig.1 will be taken as an example to explain the application of the present invention hereinafter. The application can be analogized t to the situations in which multiple backbone networks and metropolitan networks are provided. And the description is not used to limit the present invention.

The meaning of each abbreviation in Fig. 1 is as below:

H.323GK: Gatekeeper Device in H.323 protocol;

GW: Border Gateway Device;

POP: POP Router

IPT: IP Terminal Telephone;

VT: Visual Terminal;

IAD: Integrated Access Device;

PC: Personal Computer;

IP address of GK1: 210.51.195.10

IP address of GK2: 210.51.196.10

H.323GK within the first metropolitan area network is abbreviated to GK1 and H.323GK within the second metropolitan area network is abbreviated to GK2 hereinafter.

The following rules are related to the present embodiment, which include:

I. Telephone number allocation rules

1) The telephone numbers within the first metropolitan area network start with 1011, in which the audio telephone numbers allocated are 1011(0-5) xx, the video telephone number allocated are 1011(6-9) xx and the video conference numbers allocated are 011xxxx.

2) The telephone numbers within the second metropolitan start with 1022, in which the audio telephone numbers allocated are 1022(0-5) xx, the video telephone number allocated are 1022(6-9) xx and the videoconference numbers allocated are 022xxxx.

3) The telephone numbers in backbone network 1, backbone network 2 and backbone network 3 start with 1100, 1200 and 1300 respectively.

4) The IP address of gateway GW1 (within the first metropolitan area network) is 210.51.195.11. Supposing there are one audio terminal with number 1011111 and one video terminal with number 1011999 are connected to the GW1 respectively.

5) The IP address of gateway GW2 (inside the second metropolitan area network) is 210.51.195.11. Supposing there are one audio terminal with number 1022111 and one video terminal with number 1022999 are connected to the GW2 respectively.

II. Description of TOS label values

1) The defaulted TOS value within the network is 0.

2) According to the mapping table A and for cross-zone calls, if the called party number is 1011(0-5) xx or 1022(0-5) xx, then TOS=5; and, if the called party number is 1011(6-9) xx or 1022(6-9) xx, then TOS=6; and, if the called party is 011xxxx or 022xxxx, then TOS=7. And if the calling party number is 1100xxx, then TOS=5, and if the calling party number is 1200xxx, then TOS=6. Therefore, a router of backbone network 1 is passed through to dial the audio terminal with a corresponding TOS = 5; and a router of backbone network 2 is passed through to dial a video terminal with TOS = 6. And packets of videoconference with TOS= 7 are passed through a router of backbone network 3 (i.e. packets of the calling party number and the called party number whose format is 011xxxx or 022xxxx will be labeled with TOS value 7).

III. Brief description of POP route policy

1) TPOP within the first metropolitan area network is physically connected to Router No. 4, Router No. 8 and Router No. 12 in the three backbone networks. And the next hop address is R4 (Router No. 4) if TOS=5; the next hop address is R8 (Router No. 8) if TOS=6; and the next hop address is R12 (Router No. 12) if TOS=7.The TPOP within the second metropolitan network is physically connected to Router NO. 2, Router NO. 6 and Route NO. 10 in the three backbone networks. And the next hop address is R2 (Router NO. 2) if TOS=5, the next hop address is R6 (Router NO. 6) if TOS=6 and the next hop address is R10 (Route NO. 10) if TOS=7.

2) Then the router in the backbone networks routes by applying a route policy in which data packets are first routed according to the TOS so as to find the correspondent node address according to the IP address and TOS value. Therefore, the communication quality is highly improved.

IV. Description of TCP detected ports:

Three ports, i.e. port 1722, port 1724 and port 1726(any port of no special use may be selected) are used by H.323GK to detect TCP request coming from the external. According to mapping table C, port 1722 is corresponding to TOS value 5, port 1724 is corresponding to TOS value 6, and port 1726 is corresponding to TOS value 7. Therefore, TOS value 5,6 and 7 are bound to the port 1722,1724 and 1726 respectively in the initialization phase of the process.

V. Classification of call

1011xxx calling 1022(0-5) xx corresponds to "TOS=5";

1011xxx calling 1022(6-9) xx corresponds to "TOS=6";

1022xxx calling 1011 (0-5) xx corresponds to "TOS=5";

1022xxx calling 1011(6-9)xx corresponds to "TOS=6";

1100xxx calling 1011xxx or 1100xxx calling 1022xxx corresponds to "TOS=5";

1200xxx calling 1011xxx or 1200xxx calling 1022xxx corresponds to "TOS=6";

1011xxx calling 1100xxx, 1022xxx calling 1100xxx, 011xxxx calling 1100xxx or 022xxxx calling 1100xxx correspond to "TOS=5";

1011xxx calling 1200xxx, 1022xxx calling 1200xxx, 011xxxx calling 1200xxx, or 022xxxx calling 1200xxx correspond to "TOS=6";

1011xxx calling 1300xxx, 1022xxx calling 1300xxx, 011xxxx calling 1300xxx, or 022xxxx calling 1300xxx correspond to "TOS=7";

011xxxx calling 1200xxx, 022xxxx calling 1100xxx; 1200xxx calling 011xxxx; or 1100xxx calling 022xxxx correspond to "TOS=7";

An exemplifying specific embodiment will be given hereinafter to illustrate the present invention. In the embodiment, a terminal with the telephone number 1022999 in the second metropolitan area network dials a terminal with the telephone number 1011999 in the first metropolitan area network (a cross-zone video call) by using the TOS-based route that comprises the following steps:

(1) GW2 sends an ARQ message to GK2, which is labeled with the zone defaulted TOS value 0;

(2) GK2 receives the ARQ message, identifies that the call is a cross-zone call according to the called party number, and finds the corresponding TOS value is 6 by querying the mapping table A.

(3) GK2 sends out an LRQ message and identifies the TOS value is 6 according to the address of the neighbor gatekeeper GK1. The IP header of the LRQ message is labeled with TOS value 6, which is then forwarded to the Router No. 6 in the backbone network 2.

(4) GK1 receives the LRQ message and queries the mapping table B according to the source IP field of the LRQ message. In the mapping table B, the IP address of the top gatekeeper in backbone network 1 corresponds to TOS value 5, the IP address of the top gatekeeper in backbone network 2 corresponds to TOS value 6, and the IP address of the top gatekeeper in backbone network 3 corresponds to TOS value 7. And it is found that the TOS value is 6, which corresponds to TCP port 1726. Therefore, 6 is labeled into the IP header of the LCF message, and simultaneously port 1726 is returned to GK2.

(5) After GK2 receives the LCF message, it sends an ACF message to GW2. The TOS value in the IP header of the ACF message is 0, and the TOS value in the non-standard field is 6 according to the result obtained in step (2). Thereafter, the IP headers of the H.245 messages sent from the GW2 are all labeled with TOS value 6.

(6) GW2 sends a setup message, the TOS value in the IP header of which is 0. GK2 transmits the setup message and identifies that the TOS value is 6 according to the called party number, so it forwards the message to Router No. 6 in the backbone network 2. Then Router No. 6 transmits the message to GK1 according to the IP address and the TOS value based policy. Further, GK1 transmits the message to GW1.

(7) GW1 responds with a Call Proceeding message, which is labeled with TOS value 6. And the following Alerting message and Connect message are also labeled with TOS value 6.

(8) GW1 sends an ARQ message to GK1, the TOS value in the IP packet header of which is 0. GW1 queries the calling party number list (terminal numbers that are not in the metropolitan area network) and can't find a match. Then, GW1 identifies that the TOS value is 6 according to the called party number in the message.

(9) GK1 responds with an ACF message to GW1, the TOS value in the IP packet header of which is 0, and the TOS value in the nonstandard field is 6 according to the result obtained in step (7). Thereafter, the TOS value in the IP packet header of all the H.245 messages sent from GW1 is set to be 6, and the messages are passed through router in the backbone network 2.

Hereinafter, description of the case in which the call party number has the priority to be first analyzed will be given, taking 1200111 calling 1011111 for example:

Supposing a video terminal 1200222 in backbone network 2 dials an audio terminal 1011111 in the first metropolitan area network. When GW1 sends an ARQ message, since the TOS value is found to be 5 according to the called party number, then all the following H.245 messages will be labeled with TOS value 5 and will be passed through the router in backbone network 1, thus the problem that the call can't be got through may arises. Therefore, the policy of first analyzing the calling party number must be applied, i.e. first to query the calling party number list (terminal numbers that are not in the metropolitan area network), if no match result can be found then route will be performed by setting the TOS value according to the called party number.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

### INDUSTRIAL APPLICATION

The present invention introduces a set of rules for the H.323 gatekeeper and the border gateway, labels the H.323 data packets of signaling and media with different TOS values by identifying data of the calling party IP address, calling party number, called party number etc. in the call signaling message, and the method achieves the flow separation of the signaling and media based on the H.323 standard in the IP telephony network, enhances greatly the security and maintainability of the IP telephony network and improves the network executing efficiency. Also, dealing with the signaling packets and media packets, audio packets and video packets in a manner of flow separation provides a basis and controlling means for the client to optimize the configuration of the network resources. The present invention is applicable for transporting the signaling and media in a manner of flow separation in IP telephony network in services based on H.323 standard including services of IP telephony, fax and video. Also the present invention is applicable for the other relative areas having similar function requirements.

## Claims

1. A method for controlling flow separation of signaling and media in IP telephony network based on the H.323 protocol, **characterized in that** the method comprises the steps of :
identifying data packets of the signaling information and media information;
labeling the data packets of signaling information and media information respectively that are transmitted between the internal and external of the metropolitan area network in the IP telephony network with different TOS values according to the calling procedure rules of the H.323 protocol; and
policy routing the data packets of signaling information and media information in the internal and external of the metropolitan area network according to the different TOS values upon cooperation of gatekeepers and routers configured in the IP telephony network to achieve the flow separation of signaling information and media information.

2. The method according to claim 1, **characterized in that** the method comprises the following steps:
a) negotiating the TOS values used for data packets transported within the local zone and the data packets outgoing zone between the border gateway and gatekeeper within the metropolitan area network and configuring TOS-based policy routing on the router;
b) establishing mapping tables based on TOS values on the gatekeeper, wherein said mapping tables include: a mapping table A that maps the TOS value to the analysis field of the calling party number and the called party number of the call, a mapping table B that maps the TOS value to the IP address of the neighbor gatekeeper outside the metropolitan area network, and a mapping table C that maps the TOS value to the ports detected by the TCP link proxy procedure;
c) starting multiple TCP proxy procedures according to the mapping relationship shown in the mapping table C, detecting TCP link request from the external at the multiple ports , binding and assigning the corresponding TOS value in the mapping table C to said port in the phase when each TCP proxy procedure initializes the said port detected;
d) achieving the flow separation of the signaling and media by identifying the data packets of the signaling information and media information, labeling the data packets of signaling information and media information in different call modes and at different stages that are transmitted between the internal and external of the metropolitan area network in said IP telephony network with corresponding TOS values according to the call procedure rules of H.323 protocol and by querying the corresponding mapping tables A, B, or C, and performing policy routing based on the TOS value upon the cooperation of the gatekeepers and routers.

3. The method according to claim 2, **characterized in that** said step of configuring a TOS-based policy routing on the routers in said step a) further comprises the step of configuring a TOS-based policy routing on the border routers in the metropolitan area network in said IP telephony network and configuring a TOS-first based policy routing on the routers in the backbone network.

4. The method according to claim 3, **characterized in that** said step of configuring a TOS-first based policy routing on the routers in the backbone network further comprises the step of applying a strategy of first analyzing the calling party number, wherein the strategy includes:
performing query according to the calling party number first in order to obtain and set the corresponding TOS value for routing; and
performing query according to the called party number then if no mapping result can be found by said query according to the calling party number.

5. The method according to claim 2, **characterized in that** said step d) further comprises the steps of :
obtaining the corresponding TOS values according to the calling party number and the called party number contained in the LRQ message that is transmitted from the gatekeeper to the neighbor gatekeeper outside said metropolitan area network according to the mapping relationship shown in the mapping table A; and
setting said corresponding TOS value into the IP header of said LRQ message.

6. The method according to claim 2, **characterized in that** said step d) further comprises the steps of:
obtaining the corresponding TOS value according to the IP address of the neighbor gatekeeper within the backbone network in said IP telephony network contained in the LRQ message that is received by the gatekeeper from the neighbor gatekeeper outside the metropolitan area network according to the mapping relationship shown in the mapping table B; and
labeling the IP header of the LCF or LRJ message responded with said corresponding TOS value.

7. The method according to claim 6, **characterized in that** the method further comprises the following steps if the message responded is an LCF message:
querying the mapping table C to obtain the ports detected by the corresponding TCP link proxy procedure according to said corresponding TOS value labeled;
filling said ports into said LCF message;
returning said LCF message to the remote terminal gatekeeper in said IP telephony network to dictate that the following setup messages of the remote terminal must be forwarded to said ports detected by the corresponding TCP link proxy procedure.

8. The method according to claim 2, **characterized in that** said step d) further comprises the steps of:
obtaining the corresponding TOS value according to the called party number contained in the first setup message of the Q.931 message that is sent from the gatekeeper to the external of said metropolitan area network according to the mapping relationship shown in the mapping table A; and
setting said corresponding TOS values into the IP headers of all the following Q.931 messages.

9. The method according to claim 2, **characterized in that** said step d) further comprises the step of evaluating the TOS value included in the nonstandard field of the ACF messages returned to the border gateway from the gatekeeper, wherein the TOS value included in the nonstandard field is evaluated according to the following rules:
setting the TOS value included in the nonstandard field of the ACF message as the defaulted value if it's a call within the metropolitan area network;
determining the TOS value included in the nonstandard field of the ACF messages by querying the mapping table A according to the called party number in the calling party ARQ message if it's a call going out of the metropolitan area network;
determining the TOS value included in the nonstandard field of the ACF messages by querying the mapping table A according to the called party number in the called party ARQ message in defaulted cases if it's a call coming into the metropolitan area network; wherein before said query, it's allowed to analyze the calling party number in the ARQ message first, which comprises the step of determining the TOS value corresponding to the calling party number by querying the mapping table A and checking the priority sign corresponding to said TOS value, wherein if said TOS value is set with a top priority, it will be first filled into the nonstandard field of the ACF message.

10. The method according to claim 9, **characterized in that** said step d) further comprises the steps of:
said border gateway obtaining the TOS value from the nonstandard field in the received ACF message returned by the gatekeeper after the border gateway sending the calling party ARQ message to the gatekeeper to request address resolution;
said border gateway saving said TOS value ; and,
said border gateway checking whether or not the call signaling address included in the ACF message is the IP address of the home gatekeeper; if yes, the call is indicated to be a route call, then the defaulted TOS value will be set in the IP header of all the following Q.931 messages ; otherwise, the call is indicated to be a direct call, then the returned TOS value in the nonstandard field in said ACF message will be set in the IP header of all the following Q.931 messages.

11. The method according to claim 9, **characterized in that** said step d) further comprises the steps of:
said border gateway obtaining the TOS value from the received nonstandard field in the ACF message returned by the gatekeeper after said border gateway sending the calling party or the called party ARQ message to the gatekeeper to request address resolution;
said border gateway saving said TOS value obtained;
said border gateway setting said saved TOS value into the IP headers of all the H.245 messages if H.245 messages need to be exchanged with a remote terminal in the call and said H.245 messages are not passed through the router of the gatekeeper;
said border gateway setting the defaulted TOS value into the IP headers of all the H.245 messages forwarded to the upper-level gatekeeper if H.245 messages need to be exchanged with a remote terminal in the call and said H.245 messages need to be passed through the router of the gatekeeper;
said gatekeeper receiving said H.245 messages transmitted from the border gateway, retrieving said saved TOS values of the corresponding call, setting the corresponding TOS value into the IP headers of all the H.245 messages, and forwarding said H.245 messages to the remote terminal.

12. The method according to claim 9, **characterized in that** for calls between the first metropolitan area network and the second metropolitan area network which are connected and communicated through the backbone network, said step of policy routing the data packets based on the TOS values comprises the steps of:
the border gateway of said second metropolitan area network sending an ARQ message to its home gatekeeper to request admission authentication and address resolution, wherein a zone defaulted value is set in the IP header of said ARQ message;
the gatekeeper of said second metropolitan area network receiving said ARQ message, identifying whether the call is an intra-zone call or an inter-zone call by analyzing the called party address, and obtaining the corresponding TOS value by querying the mapping table A according to the called party number; wherein, if the call is an intra-zone call and has passed the admission authentication, then said gatekeeper returns an ACF message to the border gateway of said second metropolitan network, if the call is an inter-zone call, then said gatekeeper forwards an LRQ message to the gatekeeper of said first metropolitan network corresponding to the called party number;
the gatekeeper of said second metropolitan network sending an LRQ message to the gatekeeper of said first metropolitan network to request address translation, obtaining the corresponding TOS value according to the calling party number and the called party number contained in the message based on the relationship shown in the mapping table A, setting the corresponding TOS value into the IP header of said LRQ message, and forwarding said LRQ message to the router of the backbone network corresponding to the corresponding TOS value by using the TOS based policy routing, wherein said LRQ message is then further transmitted to the gatekeeper of said first metropolitan area network;
the gatekeeper of said first metropolitan network receiving the LRQ message, obtaining the corresponding TOS value by querying the mapping table B according to the source IP field in said LRQ message, and setting the corresponding TOS value into the IP header of the LCF or LRJ message responded; wherein, if the message responded is an LCF message, the mapping table C also needs to be queried so as to find the ports detected by the corresponding TCP link proxy procedure according to the corresponding TOS value, and said ports are then filled into the LCF message and returned to the gatekeeper of said second metropolitan area network to dictate the second metropolitan area network that the following setup messages thereof must be forwarded to said ports detected by the corresponding TCP link proxy procedure;
the gatekeeper of said second metropolitan area network forwarding an ACF message to the border gateway of said second metropolitan area network after it receives said LCF message, wherein the TOS value in the IP header of said ACF message is the zone defaulted value and the TOS value in the nonstandard field is determined according to said rules;
the border gateway of said second metropolitan area network obtaining the TOS value from the nonstandard field of the returned ACF message, saving said TOS value obtained, and checking whether or not the call signaling address included in the ACF message is the IP address of the home gatekeeper; if yes, the call is indicated to be a route call, then the defaulted TOS value will be set into the IP headers of all the following Q.931 messages ; otherwise, the call is indicated to be a direct call, then the TOS values in the nonstandard field returned through the ACF messages will be set into the IP headers of all the following Q.931 messages; wherein, if H.245 messages need to be exchanged with said first metropolitan area network in the call, then the border gateway of said second metropolitan network will set said saved TOS value into the IP headers of all the following H.245 messages; if the H.245 messages are exchanged with said first metropolitan area network in the call by adopting the mode of gatekeeper route, then the border gateway of said second metropolitan network will set the defaulted TOS value into the IP headers of all the following H.245 messages, wherein, the upper-level gatekeeper of said border gateway retrieving the saved TOS values of the corresponding call, setting the corresponding TOS values into IP headers of all H.245 messages before forwarding said H.245 messages and then forwarding the H.245 messages to the remote terminal;
the border gateway of said second metropolitan area network sending a setup message to the call signaling address contained in the ACF message to start the call.
